# EUROPÄISCHE PATENTSCHRIFT

(11) **EP 1 609 555 B1**
(45) Veröffentlichungstag und Bekanntmachung des Hinweises auf die Patenterteilung: **06.10.2010**
(21) Anmeldenummer: 04014539.3
(22) Anmeldetag: 22.06.2004
(51) Int. Cl.: B23K 26/073, B23K 26/28, B29C 65/16

(54) **Schweissvorrichtung für schlauchförmige Kunststoffteile**
Welding device for tubular plastic parts
Dispositif de soudage pour pièces tubulaires en matière plastique

(43) Veröffentlichungstag der Anmeldung: 28.12.2005
(73) Patentinhaber: Leister Process Technologies, 6056 Kägiswil (CH)
(72) Erfinder: Chen, Jie-Wei, 6055 Alpnach Dorf (CH); Hirt, Albert, 78056 Villingen-Schwenningen (DE)
(74) Vertreter: Klocke, Peter

(56) Entgegenhaltungen:
- EP-A- 0 087 403
- EP-A- 0 472 850
- EP-A- 1 306 196

## Beschreibung

Die vorliegende Erfindung betrifft eine Vorrichtung zum Verbinden von schlauchförmigen Bauteilen, insbesondere Kunststoffbauteilen, durch Laserstrahlen mittels einer Laserquelle und einer Beleuchtungseinrichtung zum Formen und gezielten Lenken des Laserstrahls quasi-simultan auf die zu verbindenden Stellen sowie einer Spanneinrichtung für die Bauteile zumindestens in dem zu verbindenden Bereich.

Das Verbinden von Kunststoffbauteilen mittels Laserstrahlen im IR-Bereich, insbesondere nach dem Durchstrahlschweißverfahren, ist allgemein bekannt. Dort werden die Bauteile derart miteinander verbunden, dass ein erstes, für die Laserstrahlung transparentes Teil, das der Laserquelle zugewandt ist, auf einem die Laserstrahlung absorbierenden Bauteil angeordnet wird. An der Kontaktfläche wird das für die Laserstrahlung absorbierende Bauteil erwärmt, so dass die beiden Bauteile dort, wo die Erwärmung eingetreten ist, aufschmelzen und unter gleichzeitiger Druckanwendung verbunden werden. Hierzu ist es auch bekannt, mittels eines Scanners einen punktförmigen Laserstrahl über bestimmte Bereiche der miteinander zu verbindenden Bauteile zu bewegen. Dies geschieht üblicherweise am einfachsten mit einem bewegten Scannerspiegel. Bei ausreichend schneller Bewegung kann hierzu ein nahezu simultanes Verbinden von Bauteilen in den gewünschten Bereichen realisiert werden. Aus der nachveröffentlichten EP 1 518 664 A1 ist bekannt, eine Spannvorrichtung vorzusehen, die den Laserstrahl nahezu simultan auf eine Fügenaht lenkt, die an sich im Strahlschatten des von einer Laserquelle ausgehenden Laserstrahls liegen. Mit dieser bekannten Spanneinrichtung können insbesondere komplexere Bauteile quasi-simultan verschweißt werden. Grundsätzlich ist es damit auch möglich, eine Schlauchverbindung durch radiale Bestrahlung mittels eines Lasers zu realisieren, ohne dass die Laserquelle oder das Fügebauteil bewegt werden muss. Zusätzlich benötigt der Schweißvorgang jedoch eine geeignete Spannvorrichtung für schlauchförmige Teile, die eine radiale Bestrahlung erlauben.

Die EP 0 087 403 A1 beschreibt eine Vorrichtung zum Verbinden von Außenumfangsflächen von axial ineinandergreifenden, rohrartigen Artikeln durch Laserschweißen. Die Achse des Laserstrahls und der zu verschweißenden Artikel fluchten miteinander, so dass die Außenumfangsflächen für den Laserstrahl direkt nicht zugänglich sind. In einer koaxial um die Schweißstelle angeordneten Umlenkeinheit wird der Laserstrahl dreimal um jeweils 90 Grad umgelenkt, bevor er auf die zu verbindenden Stellen trifft. Dazu werden drei unter 45 Grad gegen die Strahlrichtung geneigte Spiegelflächen konzentrisch um die Mittelachse der Artikel so zueinander positioniert, dass sie den Laserstrahl aufteilen, aufweiten und in einem Abstand von der Außenumfangsfläche am Artikel vorbei auf die zu verbindende Stelle leiten.

Die EP 0 472 850 A2 offenbart eine Laserschweißvorrichtung zum Verbinden von Kunststoffbehälterteilen. Im zu verbindenden Bereich überlappen die Behälterteile und werden durch eine Anpresseinrichtung mittels komprimierter Luft gegen ein Widerlager gedrückt. Dazu weist die Anpressvorrichtung eine in Richtung der Behälterteile offene Druckkammer auf, die luftdicht auf die Behälterteile aufsetzbar ist. Die Druckkammer ist auf der dem Behälterteil abgewandten Seite mit einem für die Laserstrahlung transparenten Fenster versehen, durch das der von einem Scanner gelenkte Laserstrahl auf den zu erwärmenden Bereich der Kunststoffteile fällt.

Die EP 1 306 196 A1 beschreibt eine Haltevorrichtung zum Gegeneinanderpressen zweier mit Laserlicht zu verschweißender Werkstücke. Das der Laserquelle zugewandte erste Werkstück ist für Laserlicht transparent und weist einen nicht plane Oberfläche auf. An der Haltevorrichtung sind Anpresselemente für das erste Werkstück vorgesehen, die für das Laserlicht transparent sind und deren Form an die Oberfläche des Werkstücks angepasst oder anpassbar ist. Das Laserlicht trifft senkrecht auf die Anpresselemente auf und wird geradlinig, d.h. ohne Umlenkung in der Haltevorrichtung, dem zu erwärmenden Bereich der Werkstücke zugeleitet.

Der vorliegenden Erfindung liegt daher die Aufgabe zugrunde, eine Vorrichtung zum Verbinden von schlauchförmigen Bauteilen vorzuschlagen, insbesondere von Kunststoffbauteilen, die das Zusammenpressen der miteinander zu verbindenden schlauchförmigen Bauteile beim radialen quasi-simultanen Schweißen auch unter Bedingungen, die einer Serienproduktion genügen, erlaubt.

Diese Aufgabe wird erfindungsgemäß durch eine Vorrichtung mit den Merkmalen des Hauptanspruchs gelöst. Weitere vorteilhafte Ausgestaltungen sind den Unteransprüchen zu entnehmen.

Gemäß der Erfindung weist die Vorrichtung zum Verbinden von Bauteilen eine Spanneinrichtung auf, die ringförmig von der Umlenkeinrichtung für den Laserstrahl umgeben ist. Die Umlenkeinrichtung für den Laserstrahl lenkt diesen senkrecht auf die im Zentrum der Umlenkeinrichtung in der Spanneinrichtung angeordneten zu verschweißenden Bauteile. Die Spanneinrichtung weist einen Gehäusemantel mit kreisförmigem Querschnitt zur Aufnahme der zu verschweißenden Teile auf, wobei der Gehäusemantel aus einem für die Laserstrahlen durchlässigem Material besteht. Der Gehäusemantel kann beispielsweise als ein Glasrohr oder ein Rohr aus für den Laserstrahl transparentem Kunststoff bestehen. In dem Gehäusemantel befindet sich eine Klemmeinrichtung, die die miteinander zu verbinden Teile in dem Gehäusemantel klemmt, wobei die der Umlenkeinrichtung zugewandte Oberfläche der Bauteile im Bereich der Fügestellen für die Laserstrahlen zugänglich ist.

Der Gehäusemantel der Spanneinrichtung dient der Halterung der Klemmeinrichtung und ist vorzugsweise in der Umlenkeinrichtung befestigt. Damit ist es möglich, bei verschiedenen Anordnungen verschieden ausgestaltete Gehäusemantel in das Zentrum der Umlenkeinrichtung einzuführen und an dieser zu fixieren. Die Vorrichtung zum Verbinden von Bauteilen ist damit besonders einfach und produktionstauglich. Einerseits ist die Laserstrahlformlenkung, die in diesem Text zusammenfassend als Beleuchtungseinrichtung bezeichnet wird, in der bekannten Art und Weise durch geeignete bekannte optische Systeme zur Strahlformung und Bewegung des Strahls realisierbar. Andererseits erfolgt das radiale senkrechte Bestrahlen der Fügestellen durch eine einfach herzustellende ringförmige Umlenkeinrichtung, die eine entsprechende geneigte Ringfläche aufweist, die mit einer reflektierenden Oberfläche versehen ist. Im Zentrum dieser ringförmigen Umlenkeinrichtung kann mit einem geeigneten Gehäusemantel als Spanneinrichtung, die an der ringfömigen Umlenkeinrichtung fixiert wird, variabel auf unterschiedliche Anforderungen hinsichtlich der zu verschweißenden schlauchförmigen Bauteile reagiert werden.

Gemäß einer weiteren Ausbildung der Erfindung weist der Gehäusemantel zumindest an einer Stirnseite einen Anschlag als Gegenlager für die in Längsrichtung des Gehäusemantels im Innern aufzubringende Spannkraft auf. Damit kann einseitig in den Gehäusemantel, beispielsweise von der der Laserquelle abgewandten Seite, hydraulisch oder pneumatisch eine Spannkraft über geeignete Druckflächen aufgebracht werden. Nach Ausgestaltung der Fügebereiche und Vorbereitung der Bauteile werden diese zusammengepresst.

Gemäß einer weiteren Ausbildung ist in dem Gehäusemantel ein für die Laserstrahlen transparenter und für die Bauteile in dem zu verschweißenden Bereich umgebender elastischer Ring angeordnet. Dieser ist mittels einer entlang der Längsachse des Gehäusemantels beweglichen Spannplatte gegen den Anschlag pressbar und klemmt die Bauteile im Zentrum in radialer Richtung.

Beim Zusammenpressen des elastischen Ringes dehnt dieser sich zum Zentrum hin aus, so dass beispielsweise übereinander geschobene schlauchförmige Bauteile in radialer Richtung geklemmt werden. Durch die Verwendung eines für den Laserstrahl völlig transparenten Materials kann dann die radiale quasisimultane Verschweißung stattfinden.

Nachfolgend wird die Erfindung anhand von Ausführungsbeispielen näher erläutert. Es stellen dar:
- Figur 1: die vergrößerte schematische Darstellung einer Spanneinrichtung im Schnitt mit miteinander zu verbindenden schlauchförmigen Bauteilen, deren einander zugewandten Flächen konisch ausgebildet sind, und
- Figur 2: die vergrößerte Darstellung eines Gehäusemantels gemäß Figur 1 in einer anderen Ausführungsform für übereinander geschobene schlauchförmige Bauteile im entspannten (Figur 2a) und gespannten (Figur 2b) Zustand.

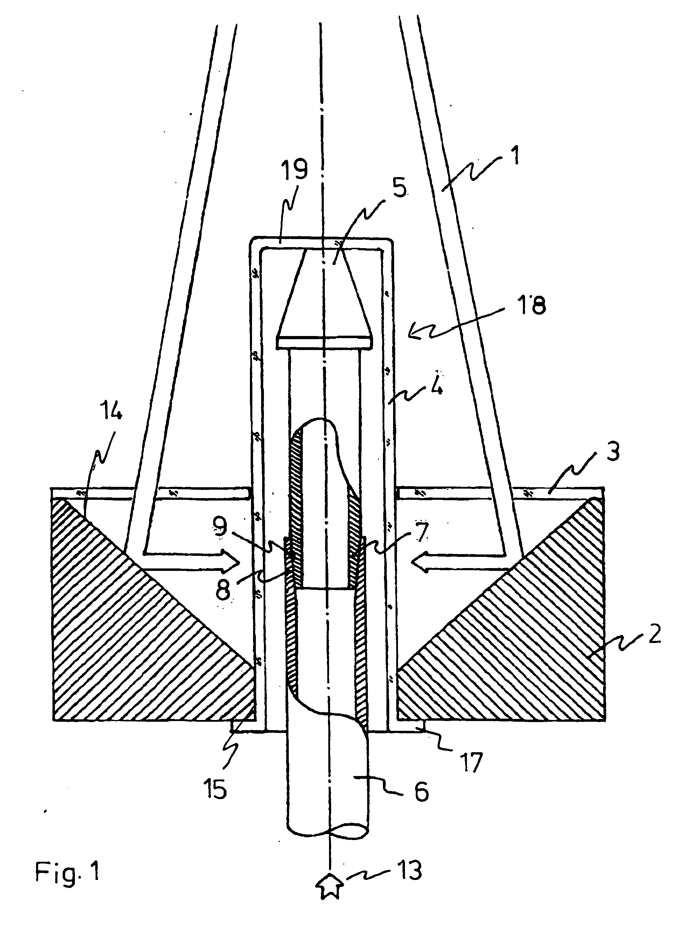

In der Figur 1 ist mit der Ziffer 1 ein quasi-simultaner Laserstrahl bezeichnet, der von einer nicht dargestellten Beleuchtungseinrichtung stammt, die in bekannter Art und Weise mittels einer Strahlenquelle und geeigneten Ablenkeinrichtungen und Strahlformeinrichtungen einen sich bewegenden Laserstrahl erzeugt. Dieser Laserstrahl 1 gelangt durch eine transparente Abdeckplatte 3 auf die reflektierende Oberfläche 14 einer ringförmigen Umlenkeinrichtung 2. Diese kann in der Praxis einfach als ringförmiger Spiegel, beispielsweise aus Kupfer oder Glas hergestellt sein. Im Zentrum der Umlenkeinrichtung 2 befindet sich eine Öffnung 15 in die eine Spanneinrichtung 18 mit einem Gehäusemantel 4 als IRtransparentes Glasrohr eingefügt ist. Dieses Glasrohr weist einen Flansch 17 auf, mit dem es sich an der Umlenkeinrichtung 2 abstützt. Die andere Stirnseite 19 des Glasrohres 4 ist in diesem Ausführungsbeispiel verschlossen und bildet einen Anschlag für die miteinander zu verschweißenden schlauchförmigen Bauteile 5, 6, die in axialer Richtung mit der Anpresskraft 13 beaufschlagt werden. Bei diesem Ausführungsbeispiel liegt das Bauteil 6 im Fügebereich 9 außen, d. h. dem Laserstrahl 1 zugewandt, so dass infolgedessen aus einem für den Laserstrahl transparentem Material bestehen muss. Entsprechend ist in diesem Ausführungsbeispiel das Bauteil 5 aus einem die Laserstrahlstrahlung absorbierendem Material. Damit eine ausreichende Verspannung in radialer Richtung in dem Fügebereich 9 erfolgt, sind die Bauteile 5, 6 entsprechend konisch auszubilden damit die zu verschweißenden Flächen in dem Fügebereich 9 einerseits optimal aufeinanderliegen und andererseits durch das Aufbringen der Anpresskraft 13 ein ausreichender axialer Anpressdruck vorhanden ist. In den Ausführungsbeispielen weisen entsprechend das Bauteil 5 einen äußeren konischen Bereich 7 und das Bauteil 6 einen inneren konischen Bereich 8 auf.

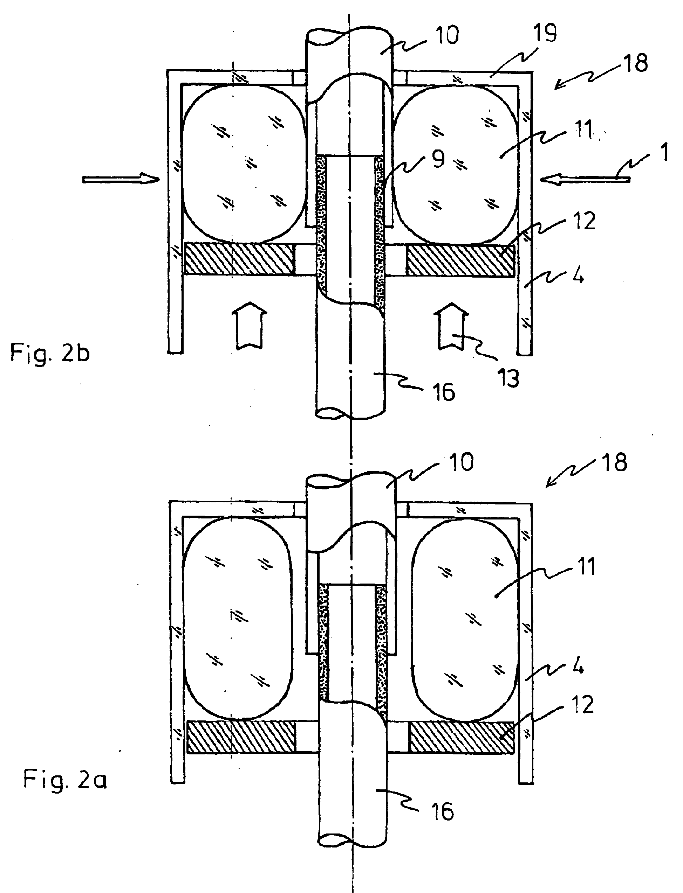

Figur 2 zeigt ein Ausführungsbeispiel, bei dem zwei miteinander zu verbindende schlauchförmige Teile 10 und 16 gezeigt sind, wobei das Bauteil 10 aus für den Laserstrahl transparentem Material und das Bauteil 16 aus einem den Laserstrahl absorbierendem Material hergestellt sind. Die Fügezone 9 wird hier durch überlappen der Wandungen der beiden schlauchförmigen Bauteile 10, 16 gebildet, ohne dass eine konische Ausbildung wie in der Figur 1 gezeigt, vorhanden ist. Um bei dieser Ausgestaltung eine radiale Anpresskraft zu erzielen, wird ein elastischer Ring 11 aus für den Laserstrahl transparentem Material in dem Glasrohr 4 angeordnet, der mittels einer Druckplatte 12, auf die die Anpresskraft 13 wirkt, gegen die Stirnseite 19 gedrückt und zusammengepresst wird. Der Ring 11 weist gemäß Figur 2a einen ausreichenden Abstand von den Bauteilen 10, 16 auf und wird erst durch die Kraft 13 gemäß Figur 2b derart zusammengepresst, dass er eine radiale Anpresskraft auf die schlauchförmigen Teile 10, 16 im Bereich der Fügezone 9 erzeugt. Für den Durchgang der schlauchförmigen Bauteile 10, 16 weist die Druckplatte 12 und auch das stirnseitige Ende 19 des Glasrohres 4 eine entsprechende Durchgangsöffnung auf. Durch den transparenten Ring 11 kann der Laserstahl 1 ungehindert zu der Fügezone 9 vordringen.

Der gesamte Aufbau ermöglich den Strahlzugang in allen radialen Richtungen und die Erzeugung der radialen Kraft kann leicht durch einfache Bewegungen automatisiert werden. Die Aufbringung der Anpresskraft 13 bei beiden Ausführungsbeispielen erfolgt mittels üblicher dem Fachmann geläufiger Maßnahmen hydraulisch oder pneumatisch.

Das vorstehend beschriebene Konzept zum Verschweißen insbesondere von Schlauchverbindungen in Form von formfesten und flexiblen Kombinationen erlaubt das Aufspannen von verschiedenen Schlauchdurchmessern und die Automatisation bei einer Massenproduktion. Dabei ist die in Figur 1 dargestellte Ausführungsform für formfeste und die in Figur 2 dargestellte Ausführungsform sowohl für formfeste als auch für flexible Schläuche geeignet.

## Patentansprüche

1. Vorrichtung zum Verbinden von Bauteilen, insbesondere Kunststoffbauteilen, durch Laserstrahlen mittels einer Laserquelle und einer Beleuchtungseinrichtung zum Formen und gezielten Lenken des Laserstrahls (1) quasi-simultan auf die zu verbindenden Stellen (9) sowie einer Spanneinrichtung für die Bauteile (5, 6, 10, 16) zumindest in dem zu verbindenden Bereich der Bauteile, **gekennzeichnet durch,**
eine die Spanneinrichtung ringförmig umgebende Umlenkeinrichtung (2) für den Laserstrahl (1), die den Laserstrahl (1) senkrecht auf die Spanneinrichtung (18) und auf die zu verschweißenden Bauteile (5, 6, 10, 16) in der im Zentrum der Umlenkeinrichtung (2) angeordneten Spanneinrichtung (18) lenkt,
eine Spanneinrichtung (18) mit einem rohrförmigen Gehäusemantel (4) mit kreisförmigen Querschnitt zur Aufnahme der zu verschweißenden Bauteile (5, 6, 10, 16), die schlauchförmig ausgebildet sind und überlappend ineinander greifen, wobei der Gehäusemantel (4) aus einem für die Laserstrahlen (1) durchlässigen Material besteht, und
eine Klemmeinrichtung (12, 13, 19) in dem Gehäusemantel (4), die die miteinander zu verbindenden Bauteile (5, 6, 10, 16) in dem Gehäusemantel (4) klemmt und eine radial gerichtete Kraft auf die Wandung in der Fügezone (9) bewirkt, wobei die der Umlenkeinrichtung (2) zugewandte Oberfläche der Bauteile (5, 6, 10, 16) im Bereich der Fügestelle (9) für die Laserstrahlen (1) zugänglich ist.

2. Vorrichtung nach Anspruch 1, **dadurch gekennzeichnet, dass** die Spanneinrichtung (18) sich an der Umlenkeinrichtung (2), vorzugsweise über einen Flansch (17), abstützt.

3. Vorrichtung nach Anspruch 1 oder 2, **dadurch gekennzeichnet, dass** der Gehäusemantel (4) zumindest an einer Stirnseite 19 einen Anschlag als Gegenlager für die in Längsrichtung des Gehäusemantels (4) im Inneren aufzubringende Anpresskraft (13) aufweist.

4. Vorrichtung nach Anspruch 3, **dadurch gekennzeichnet, dass** in dem Gehäusemantel (4) ein für die Laserstrahlen (1) transparenter und die Bauteile (10, 16) in dem zu verschweißenden Bereich (9) umgebender elastischer Ring (11) angeordnet ist, der mittels einer in der Längsachse des Gehäusemantels (4) beweglichen Druckplatte (12) gegen den Anschlag (19) pressbar ist und dabei die Bauteile (10, 16) im Zentrum in radialer Richtung klemmt.

5. Vorrichtung nach Anspruch 4, **dadurch gekennzeichnet, dass** für die Aufbringung der Anpresskraft (13) im Inneren des Gehäusemantels (4) eine in Längsrichtung bewegbare Druckplatte (12) vorgesehen ist.

6. Vorrichtung nach einem der vorangegangenen Ansprüche, **dadurch gekennzeichnet, dass** die Umlenkeinrichtung (2) in Richtung Laserquelle durch eine für den Laserstrahl (1) transparente Platte (3) abgedeckt ist.

## Claims

1. Device for joining components, in particular plastics material components, through laser radiation by means of a laser source and a lighting device for the forming and targeted guiding of the laser beam (1) quasi-simultaneously onto the locations (9) to be joined, as well as a tensioning device for the components (5, 6, 10, 16) at least in the region of the components to be joined, **characterized by**
a reflecting device (2) for the laser beam (1), said reflecting device surrounding the tensioning device in a ring-shaped manner and guiding the laser beam (1) perpendicularly onto the tensioning device (18) and onto the components (5, 6, 10, 16) to be welded in the tensioning device (18) that is located in the centre of the reflecting device (2),
a tensioning device (18) with a tubular housing outer surface (4) with a circular cross section for accommodating the components (5, 6, 10, 16) to be welded, which are tubular and interlock in an overlapping manner, wherein the housing outer surface (4) is produced from a material that is permeable to the laser beams (1), and
a clamping device (12, 13, 19) in the housing outer surface (4), which clamps the components (5, 6, 10, 16) to be joined together in the housing cover (4) and effects a radially directed force onto the wall in the joining zone (9), wherein the surface of the components (5, 6, 10, 16) facing the reflecting device (2) is accessible to the laser beams (1) in the region of the join (9).

2. Device according to Claim 1, **characterized in that** the tensioning device (18) is supported at the reflecting device (2), preferably by means of a flange (17).

3. Device according to Claim 1 or 2, **characterized in that** the housing outer surface (4) has, at least at one end face (19), a stop member as counter bearing for the contact pressure (13) to be applied in the interior in the longitudinal direction of the housing outer surface (4).

4. Device according to Claim 3, **characterized in that** a resilient ring (11), which is transparent to the laser beams (1) and surrounds the components (10, 16) in the region (9) to be welded, is located in the housing outer surface (4), said ring being pressable against the stop member (19) by means of a pressure plate (12) that is moveable in the longitudinal axis of the housing outer surface (4) and at the same time clamping the components (10, 16) in the radial direction in the centre.

5. Device according to Claim 4, **characterized in that** a pressure plate (12) that is moveable in the longitudinal direction is provided in the interior of the housing outer surface (4) for applying the contact pressure (13).

6. Device according to one of the preceding claims, **characterized in that** the reflecting device (2) is covered in the direction of the laser source by a plate (3) that is transparent to the laser beam (1).

## Revendications

1. Dispositif pour assembler des composants, en particulier des composants en matière plastique, par rayons laser au moyen d'une source laser et d'un dispositif d'illumination servant à former et diriger de manière ciblée le rayon laser (1) quasi simultanément sur les points d'assemblage (9) ainsi que d'un dispositif de serrage pour les composants (5, 6, 10, 16) au moins dans la zone d'assemblage des composants, **caractérisé par**
un dispositif de déviation (2) pour le rayon laser (1), qui entoure en forme d'anneau le dispositif de serrage et dirige le rayon laser (1) perpendiculairement sur le dispositif de serrage (18) et sur les composants à souder (5, 6, 10, 16) dans le dispositif de serrage (18) disposé au centre du dispositif de déviation (2),
un dispositif de serrage (18) avec une enveloppe de boîtier (4) tubulaire de section circulaire servant à recevoir les composants à souder (5, 6, 10, 16) qui sont réalisés sous forme de tuyaux et sont emmanchés les uns dans les autres avec recouvrement, l'enveloppe de boîtier (4) étant composée d'un matériau perméable aux rayons laser (1), et
un dispositif de blocage (12, 13, 19) dans l'enveloppe de boîtier (4), qui bloque les composants à assembler (5, 6, 10, 16) dans l'enveloppe de boîtier (4) et exerce une force dirigée radialement sur la paroi dans la zone d'assemblage (9), la surface des composants (5, 6, 10, 16) tournée vers le dispositif de déviation (2) étant accessible pour les rayons laser (1) au niveau de la zone d'assemblage (9).

2. Dispositif selon la revendication 1, **caractérisé en ce que** le dispositif de serrage (18) prend appui sur le dispositif de déviation (2), de préférence par l'intermédiaire d'une bride (17).

3. Dispositif selon la revendication 1 ou 2, **caractérisé en ce que** l'enveloppe de boîtier (4) présente au moins sur une face frontale 19 une butée servant de contre-appui pour la force de pression (13) à exercer à l'intérieur en direction longitudinale de l'enveloppe de boîtier (4).

4. Dispositif selon la revendication 3, **caractérisé en ce que** dans l'enveloppe de boîtier (4) est disposé un anneau élastique (11) transparent aux rayons laser (1) et entourant les composants (10, 16) dans la zone d'assemblage (9), qui peut être pressé contre la butée (19) au moyen d'une plaque de pression (12) mobile sur l'axe longitudinal de l'enveloppe de boîtier (4) et qui bloque ce faisant les composants (10, 16) au centre en direction radiale.

5. Dispositif selon la revendication 4, **caractérisé en ce qu'**une plaque de pression (12) mobile en direction longitudinale est prévue à l'intérieur de l'enveloppe de boîtier (4) pour exercer la force de pression (13).

6. Dispositif selon une des revendications précédentes, **caractérisé en ce que** le dispositif de déviation (2) est recouvert en direction de la source laser par une plaque (3) transparente au rayon laser (1).
